# EUROPÄISCHE PATENTANMELDUNG

(11) **EP 1 405 757 A1**
(43) Veröffentlichungstag der Anmeldung: **07.04.2004**
(21) Anmeldenummer: 03021994.3
(22) Anmeldetag: 30.09.2003
(51) Int. Cl.: B60N 3/00

(54) **Ablageplatte für Kraftfahrzeuge**

(30) Priorität: 01.10.2002 DE 10246148
(71) Anmelder: Schüle Reisen Touristik GmbH, 88316 Isny (DE)
(72) Erfinder: Schüle, Konrad, 88316 Isny (DE)
(74) Vertreter: Schwarz, Thomas, Dipl.-Ing.

(57) **Zusammenfassung**

Die Erfindung betrifft eine Ablageplatte für Kraftfahrzeuge mit mindestens zwei einander gegenüberliegenden seitlichen Einbuchtungen (2; 6; 9) zum Einsatz der Ablageplatte zwischen zwei voneinander beabstandete Fahrzeugsitze oder in eine entsprechende Vertiefung einer Fahrzeugrückbank. Um die Ablegeplatte auch ohne Gefährdung der Fahrzeuginsassen im fahrenden Fahrzeug, besonders als Spielplatte oder dgl., verwenden zu können, besteht sie aus einem mit einem Bezug (4) versehenen Schaumstoffkörper (3).

## Beschreibung

Die Erfindung betrifft eine Ablageplatte, insbesondere als Spielunterlage, für Kraftfahrzeuge nach dem Oberbegriff des Anspruchs 1.

Eine derartige Ablageplatte ist aus der DE 1 938 012 bekannt. Dort ist ein zwischen den beiden Vordersitzen aufstellbarer Autotisch offenbart, der eine aus Spanplatten, Kunststoff, Leichtmetall oder Holz bestehende Tischplatte enthält. An der Unterseite der Tischplatte sind Haltevorrichtungen für Fußgestelle montiert, durch die der Autotisch auf dem Boden bzw. Tunnel des Personenkraftwagens abgestellt wird. Dieser Autotisch ist allerdings nur für den Einsatz im stehenden Fahrzeug bestimmt. Bei fahrendem Fahrzeug würde dieser Tisch den Fahrer behindern und könnte im Falle eines Unfalls auch eine Gefährdung darstellen. Es besteht die Gefahr, daß sich der Autotisch bei einem Unfall innerhalb des Autos verklemmt oder herumfliegt und aufgrund seiner Stabilität die Insassen gefährdet.

Aufgabe der Erfindung ist es, eine Ablageplatte für Kraftfahrzeuge zu schaffen, die auch ohne Gefährdung der Fahrzeuginsassen im fahrenden Fahrzeug besonders als Spielplatte oder dgl. verwendet werden kann.

Diese Aufgabe wird durch eine Ablageplatte mit den Merkmalen des Anspruchs 1 gelöst. Zweckmäßige Ausgestaltungen und vorteilhafte Weiterbildungen der Erfindung sind in den Unteransprüchen angegeben.

Die erfindungsgemäße Ablageplatte ist relativ leicht und kann bei Bedarf einfach und schnell eingesetzt werden. Sie stellt aufgrund ihres Aufbaus selbst im Falle eines Unfalls keine Gefährdung für die Fahrzeuginsassen dar. Beim Einsatz als Spiel- oder Ablageplatte in einem Bus bildet sie vielmehr sogar eine Art Aufprallschutz innerhalb des Mittelgangs, der ein ungebremstes Vorschleudern der Insassen im Mittelgang verhindert. Die Ablageplatte ist bei Bedarf einfach verformbar und dennoch ausreichend formstabil, so daß sie als Unterlage für Spiele oder dgl. verwendet werden kann.
In einer zur Verwendung als Spielunterlage besonders vorteilhaften Ausführung ist auf der Ober- und Unterseite des Schaumstoffkörpers ein unterschiedlicher Bezug vorgesehen. So kann z.B. auf der einen Seite ein zum Kartenspielen besonders gut geeigneter glatter Bezugsstoff und auf der anderen Seite ein gummierter Bezugsstoff verwendet werden, der ein einfaches Wegrutschen von Spielfiguren oder Spielsteinen verhindert.

In einer weiteren, besonders zweckmäßigen Ausführung der Erfindung ist der Bezug auf der Ober- und/oder Unterseite in Form eines Spielmusters z.B. für Schach, Mühle oder dgl. ausgeführt oder mit diesem bedruckt. Dadurch können Spiele auch ohne die entsprechenden Spielunterlagen durchgeführt werden.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein Ausführungsbeispiel einer Ablageplatte für Busse in einer schematischen Perspektive;
- **Figur 2**: ein Ausführungsbeispiel einer Ablageplatte für Personenkraftwagen in einer schematischen Perspektive und
- **Figur 3**: ein zweites Ausführungsbeispiel einer Ablageplatte für Busse in einer schematischen Draufsicht.

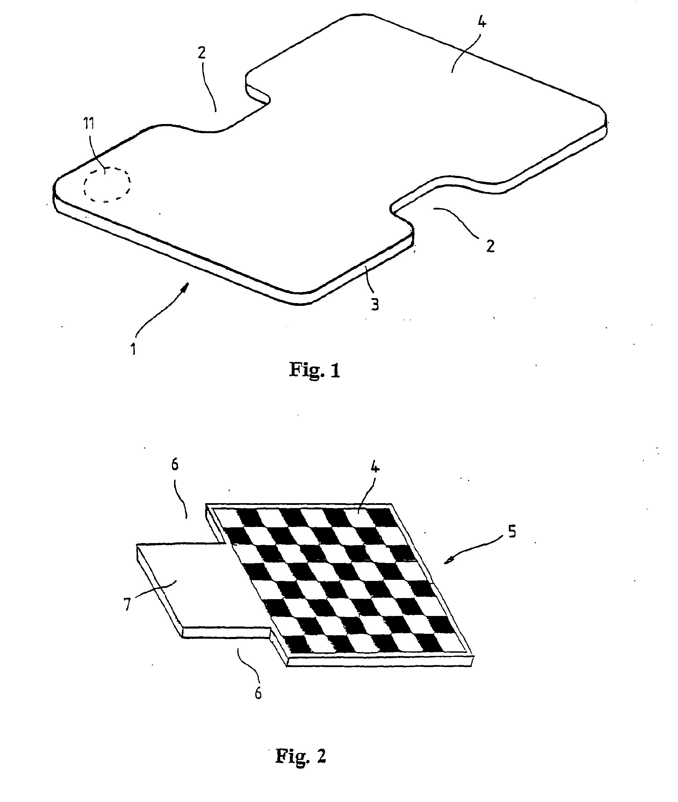

In Figur 1 ist eine Ablageplatte 1 gezeigt, die in der Mitte zwei einander gegenüberliegende Einbuchtungen 2 für die Rückenlehnen zweier zu beiden Seiten eines Mittelgangs angeordneter Sitze in einem Bus enthält. Die Ablageplatte 1 kann so zwischen die beiden am Mittelgang angeordneten Rückenlehnen eines Busses eingesetzt werden und bildet eine Ablage- oder Spielfläche für zwei hintereinander angeordnete Sitzreihen. An der Unterseite wird die Ablageplatte 1 auf den jeweiligen Seitenlehnen der vorderen und hinteren Sitze abgestützt.

Die Ablageplatte 1 besteht aus einem Schaumstoffkörper 3, der mit einem Überzug 4 aus Stoff oder dgl. überzogen ist. Der Schaumstoffkörper 3 besteht zweckmäßigerweise aus einem Polyurethanschaumstoff, der eine Rohdichte von 25 bis 30 kg/m³, eine Stauchhärte zwischen 5 und 7 kPa, eine Zugfestigkeit von mehr als 100 kPa, eine Bruchdehnung von mehr als 120%, einen Druckverformungsrest von weniger als 10% und eine Zellenzahl von 10 bis 14 cm⁻¹ aufweist. Der Schaumstoffkörper 3 ist bei Bedarf einfach verformbar und dennoch ausreichend formstabil, so daß die Ablageplatte besonders gut als Unterlage für Spiele oder dgl. verwendet werden kann.

Der Überzug besteht in vorteilhafter Weise aus einem flammhemmenden Stoff, der ein an die Innenausstattung des Fahrzeugs angepaßtes oder ein beliebiges Muster aufweisen kann. Der Überzug kann in Form eines Spielmusters ausgeführt oder mit diesem bedruckt sein, wie dies in Figur 2 gezeigt ist. Dort weist der Überzug 4 auf der einen Seite der gezeigten Ablageplatte 5 ein für Schach oder Dame geeignetes Grundmuster auf. Auf der anderen Seite kann ein anderes Spielmuster z.B. für Mühle o. ä. vorgesehen sein.

Die in Figur 2 dargestellte Spiel- oder Ablageplatte 5 ist für den Einsatz auf der Rückbank eines Personenkraftwagens mit ausklappbare Armstütze bestimmt. Beim Ausklappen der Armstütze entsteht in der Rücklehne in der Regel eine entsprechende Ausnehmung, in welche die Ablageplatte 5 eingesetzt werden kann. Hierzu weist sie zwei gegenüberliegende Einbuchtungen 6 an gegenüberliegenden Ecken auf. Dadurch entsteht ein zur Seite vorstehender Steg 7, mit dem die Ablageplatte 5 in die Ausnehmung eingesteckt wird. Die Abmessungen des Stegs 7 können derart gewählt werden, daß dieser fest innerhalb der Ausnehmung sitzt. Auch diese Ablageplatte 5 liegt mit ihrer Unterseite auf der herausgeklappten Armlehne auf.

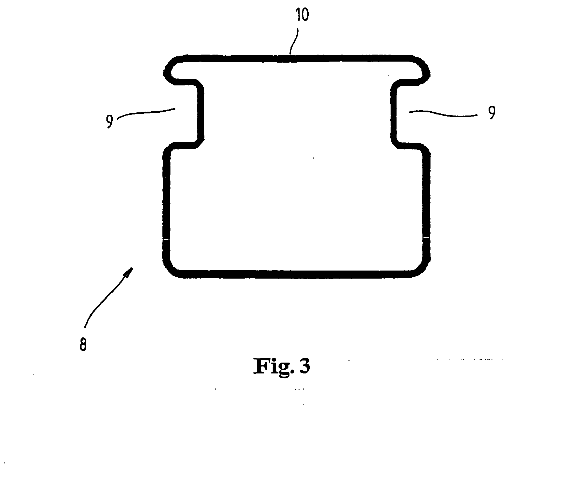

In Figur 3 ist ein weiteres Ausführungsbeispiel einer Ablageplatte 8 in einer schematischen Draufsicht gezeigt. Bei dieser sind die seitlichen Einbuchtungen 9 in der Nähe einer Querseite 10 der Ablageplatte 8 angeordnet. Diese Ausführung ist als Ablageplatte für zwei zu beiden Seiten des Mittelgangs eines Busses angeordnete Sitze geeignet.

Auf zumindest einer Seite der Ablageplatten 1, 5 oder 8 können auch in Figur 1 gestrichelt angedeutete Vertiefungen 11 zur Aufnahme von Spieljetons, Spielfiguren oder dgl. vorgesehen sein. In der Ablageplatte können außerdem bereits vorgeformte Löcher für Spielfiguren oder Spielsteine angeordnet sein. Der Stoffbezug kann auch Metallfäden enthalten oder es könnte auch eine dünne Metallfolie zwischen dem Bezug und dem Schaumstoffkörper eingelegt werden, um den Einsatz magnetischer Spielsteine zu ermöglichen.

## Patentansprüche

1. Ablageplatte für Kraftfahrzeuge mit mindestens zwei einander gegenüberliegenden seitlichen Einbuchtungen (2; 6; 9) zum Einsatz der Ablageplatte zwischen zwei voneinander beabstandete Fahrzeugsitze oder in eine entsprechende Vertiefung einer Fahrzeugrückbank , **dadurch gekennzeichnet, daß** die Ablageplatte (1; 5; 8) aus einem mit einem Bezug (4) versehenen Schaumstoffkörper (3) besteht.

2. Ablageplatte für Kraftfahrzeuge nach Anspruch 1, **dadurch gekennzeichnet, daß** auf der Ober- und Unterseite des Schaumstoffkörpers (3) ein unterschiedlicher Bezug (4) angeordnet ist.

3. Ablageplatte für Kraftfahrzeuge nach Anspruch 1 oder 2, **dadurch gekennzeichnet, daß** auf der einen Seite des Schaumstoffkörpers (3) eine glatter und auf der anderen Seite ein rutschfester Bezug (4) angeordnet ist.

4. Ablageplatte für Kraftfahrzeuge nach einem der Ansprüche 1 bis 3, **dadurch gekennzeichnet, daß** der Bezug (4) auf der Ober- und/oder Unterseite des Schaumstoffkörpers (3) mit einem Spielmuster versehen ist.

5. Ablageplatte für Kraftfahrzeuge nach einem der Ansprüche 1 bis 4, **dadurch gekennzeichnet, daß** der Schaumstoffkörper (3) aus Polyurethanschaumstoff besteht.

6. Ablageplatte für Kraftfahrzeuge nach einem der Ansprüche 1 bis 5, **dadurch gekennzeichnet, daß** die seitlichen Einbuchtungen (2) in der Mitte der beiden Längsseiten der Ablageplatte (1) angeordnet sind.

7. Ablageplatte für Kraftfahrzeuge nach einem der Ansprüche 1 bis 4, **dadurch gekennzeichnet, daß** die seitlichen Einbuchtungen (9) in der Nähe einer Querseite (10) der Ablageplatte (8) angeordnet sind.

8. Ablageplatte für Kraftfahrzeuge nach einem der Ansprüche 1 bis 4, **dadurch gekennzeichnet, daß** die seitlichen Einbuchtungen (6) an zwei gegenüberliegenden Ecken der Ablageplatte (5) angeordnet sind.

9. Ablageplatte für Kraftfahrzeuge nach einem der Ansprüche 1 bis 8, **dadurch gekennzeichnet, daß** auf zumindest einer Seite der Ablageplatte (1; 5; 8) Vertiefungen (11) vorgesehen sind.

10. Ablageplatte für Kraftfahrzeuge nach einem der Ansprüche 1 bis 9, **dadurch gekennzeichnet, daß** der Überzug (4) aus einem flammhemmenden Stoff besteht.
